# EUROPÄISCHE PATENTSCHRIFT

(11) **EP 1 917 588 B1**
(45) Veröffentlichungstag und Bekanntmachung des Hinweises auf die Patenterteilung: **30.09.2015**
(21) Anmeldenummer: 07725489.4
(22) Anmeldetag: 23.05.2007
(51) Int. Cl.: G06F 11/07, G06F 11/36

(54) **VERFAHREN UND VORRICHTUNG ZUR STÖRUNGSBEHEBUNG EINER DATENVERARBEITUNGSEINRICHTUNG**
METHOD AND DEVICE FOR THE ERROR RECOVERY OF A DATA PROCESSING UNIT
PROCÉDÉ ET DISPOSITIF POUR SUPPRIMER LES PERTURBATIONS AFFECTANT UN DISPOSITIF DE TRAITEMENT DE DONNÉES

(30) Priorität: 23.05.2006 DE 102006024232
(43) Veröffentlichungstag der Anmeldung: 07.05.2008
(73) Patentinhaber: Fujitsu Technology Solutions Intellectual Property GmbH, 80807 München (DE)
(72) Erfinder: KÄFER, Gerald, 81739 München (DE); KÖNIG, Christoph, 85521 Ottobrunn (DE)
(74) Vertreter: Epping - Hermann - Fischer
(86) Internationale Anmeldenummer: PCT/EP2007/004589
(87) Internationale Veröffentlichungsnummer: WO 2007/134857

(56) Entgegenhaltungen:
- EP-A- 1 480 128
- US-A1- 2003 135 592
- US-B1- 6 681 344
- Sergios Theodoridis, Konstantinos Koutroumbas: "Pattern Recognition", 1999, Academic Press ISBN: 0-12-686140-4 pages 1-3, * The whole section 1.1 *

## Beschreibung

Die vorliegende Erfindung betrifft ein Verfahren das zur Störungsbehebung einer Datenverarbeitungseinrichtung eingesetzt wird. Ebenso betrifft die vorliegende Erfindung eine Vorrichtung zur Durchführung des erfindungsgemäßen Verfahrens.

Rechner werden für vielfältige Anwendungen eingesetzt, unter anderem für Bürotätigkeiten, Steuerungen von Fertigungsanlagen und Roboter. Dies erfordert eine Zusammenarbeit verschiedenster Geräte und Softwarekomponenten in den entsprechenden Rechnersystemen. Den Anforderungen entsprechend werden auch dynamisch neue Geräte oder Softwarekomponenten in das Rechnersystemen integriert. Hierbei können aus unterschiedlichsten Gründen Fehlverhalten der.Rechnersysteme auftreten. Typische Ursachen sind Inkompatibilität einzelner Geräte oder Softwarekomponenten oder eine fehlerhafte Einrichtung dieser Geräte oder Komponenten.

Dienstleister bieten an, dieses Fehlverhalten zu beseitigen. Typischerweise wird nach dem Auftreten eines Fehlverhaltens eine Servicestelle kontaktiert und versucht, in einem kurzen Telefongespräch das Fehlverhalten zu konkretisieren und die Ursachen zu ermitteln oder zumindest einzugrenzen. Hierbei ist es unabdingbar, die Konfigurationsdaten des Rechnersystems und die detaillierten Fehlermeldungen der Servicestelle zu übermitteln. Typischerweise werden in Fehlermeldungen Fehlerhinweise in Form von Texten oder Fehlercodes bis hin zu momentanen Speicherinhalten übermittelt. Ferner können auch erstellte Logdateien des Rechnersystems oder der ausgeführten Programme übermittelt werden.

Manche Softwarekomponenten können keine Logdateien generieren oder Fehlermeldungen über das Rechnersystem ausgeben. Hierunter fallen viele web-basierte bzw. terminal-basierte Anwendungen, bzw. Anwendungen, die in einer besonders gekapselten Umgebung ablaufen. Diesen Programmen sind aus Gründen der Sicherheit keine Schreibrechte gestattet. Für diese Anwendung führt dies jedoch nachteiliger Weise dazu, dass eine Beratung bei Auftreten einer Fehlfunktion und eine Eingrenzung der Ursachen für die Fehlfunktion mangels Logdateien oder ähnlichem mittels eines Telefongespräches oder einer dezentralen Servicestelle erheblich erschwert ist.

Aus der US 6,681,344 B1 ist ein System und ein Verfahren zur automatischen Diagnose eines Computerproblems bekannt. Hierzu wird eine Anwendung zur automatischen Diagnose von Problemen mit einem Objekt mittels im Wesentlichen akkuraten, vollständigen und sprachunabhängigen Problembeschreibungsdaten beschrieben. Ein Nachteil des dort beschriebnen Verfahrens liegt darin, dass es sich nicht anwenden lässt, wenn derartige Daten nicht vorliegen.

Das Buch "Pattern Regognition" von Sergios Theodoridis und Konstantinos Koutroumbas, Academic Press, 1999, beschreibt unter anderem die Bedeutung der wissenschaftlichen Disziplin der Mustererkennung.

Eine Aufgabe der vorliegenden Erfindung ist ein verbessertes Verfahren zum Beheben von Störungen eines Rechnersystems bereitzustellen.

Das erfindungsgemäße Verfahren mit den Merkmalen des Patentanspruchs 1 stellt eine verbesserte Störungsbehandlung bereit. Die Vorrichtung mit den Merkmalen des Patentanspruchs 6 ermöglicht das erfindungsgemäße Verfahren durchzuführen.

Zur Störungsbehandlung einer Datenverarbeitungseinrichtung zieht das erfindungsgemäße Verfahren folgende Schritte vor: Erfassen von Eingabeinformationen und/oder Ausgabeinformationen eines Benutzers an einer Mensch-Maschine-Schnittstelle der Datenverarbeitungseinrichtung; Erfassen einer Störungsmeldung, die eine Störung der Datenverarbeitungseinrichtung anzeigt; Übermitteln der erfassten Störungsmeldung zusammen mit der Eingabeinformation und/oder der Ausgabeinformation an eine Störungsbehandlungsstelle; Auswerten der übermittelten Störungsmeldung durch Bereitstellen einer Mehrzahl von vorgegebenen Mustern und einer Mehrzahl der den vorgegebenen Mustern zugeordneten Fehlerbehandlungsroutinen in der Störungsbehandlungsstelle; Auswählen der Muster aus der Mehrzahl von vorgegebenen Mustern, die in der Eingabeinformation und/oder der Ausgabeinformation enthalten sind; und Ermitteln der den ausgewählten Mustern zugeordneten Fehlerbehandlungsroutine aus einer Mehrzahl von Fehlerbehandlungsroutinen durch die Störungsbehandlungsstelle; und Übermitteln der ermittelten Fehlerbehandlungsroutine an die Datenverarbeitungseinrichtung zum Behandeln der Störung.

Eine der Erfindung zugrunde liegende Idee besteht darin, Informationen, die von einem Benutzer in die Datenverarbeitungseinrichtung eingegeben werden oder Informationen, die von der Datenverarbeitungseinrichtung an einen Benutzer ausgegeben werden, in der Weise zu erfassen, wie sie sich dem menschlichen Benutzer präsentieren oder vom Menschen eingegeben werden (z.B. als Sprache). Die Informationen werden an einer Mensch-Maschine-Schnittstelle auf der Seite des Benutzers oder Menschen erfasst. Die Informationen liegen somit vor einer Umwandlung einer Eingabe oder Eingabeinformation durch die Mensch-Maschine-Schnittstelle vor, beziehungsweise eine Ausgabe oder Ausgabeinformation der Datenverarbeitungseinrichtung an den Benutzer ist durch die Mensch-Maschine-Schnittstelle erfolgt und somit als für den Benutzer erfassbare Information vorliegend. Das erfindungsgemäße Verfahren sieht vor, die Eingabeinformation und/oder Ausgabeinformation von auch mehreren Mensch-Maschine-Schnittstellen zu erfassen.

Information, Eingabeinformation oder Ausgabeinformation, einer Mensch-Maschine-Schnittstelle bzw. im Rahmen dieser Beschreibung, bezeichnen Daten in einer Form, die für einen Menschen erfassbar sind. Erfindungsgemäß wird die Darstellung einer Anzeigeneinrichtung der Datenverarbeitungseinrichtung als optische Ausgabeinformation erfasst. Dabei wird der Textin halt der optischen Ausgabeinformation mittels einer Texterkennungseinrichtung ermitelt.

Anhand dieser Informationen wird eine geeignete Fehlerbehandlungsroutine mit dem erfindungsgemäßen Verfahren ermittelt.

Ein Vorteil des erfindungsgemäßen Verfahrens liegt darin, dass die Eingabeinformation und/oder Ausgabeinformationen häufig Hinweise enthalten, wodurch eine Störung verursacht sein könnte. Dies umfasst beispielhafter Weise eine fehlerhafte Eingabe durch den Benutzer. Besonders vorteilhaft ist das erfindungsgemäße Verfahren, wenn die ausgeführte Applikation oder das ausgeführte Computerprogrammprodukt in einer gekapselten Umgebung ausgeführt wird, die kein Abspeichern von Logdateien zur Fehlerermittlung zulässt. In diesem Fall kann das erfindungsgemäße Verfahren parallel zu der Anwendungsapplikation ausgeführt werden, um im Fall einer auftretenden Störung eine Fehlerbehandlungsroutine für die Anwendungsapplikation bereitzustellen.

Die Störungsmeldung kann manuell durch einen Benutzer generiert werden, indem er zum Beispiel eine Hilfefunktion auswählt, aber auch automatisch durch eine Anwendungsapplikation generiert werden, wenn diese entsprechende Schätzalgorithmen oder Erkennungsalgorithmen für ein Auftreten einer Störung beinhaltet.

Die Störungsbehandlungsstelle kann in der Datenverarbeitungseinrichtung als eigenständiges Computerprogrammprodukt integriert sein, vorteilhafterweise ist die Störungsbehandlungsstelle jedoch eine zentrale Einrichtung, an welche eine Vielzahl von Datenverarbeitungseinrichtungen angeschlossen sind. Durch die zentrale Erfassung der Störungsmeldungen und Informationen kann im Mittel der Verwaltungsaufwand für die Datenverarbeitungseinrichtungen gesenkt werden.

Die erfindungsgemäße Vorrichtung sieht folgende Einrichtungen vor: mindestens eine Erfassungseinrichtung zum Erfassen von Eingabeinformationen und/oder Ausgabeinformationen eines Benutzers an einer Mensch-Maschine-Schnittstelle der Datenverarbeitungseinrichtung; eine Störungserfassungseinrichtung zum Erfassen einer Störungsmeldung, die eine Störung der Datenverarbeitungseinrichtung anzeigt; eine erste Schnittstelle zum Übermitteln der erfassten Störungsmeldung zusammen mit der Eingabeinformation und/oder der Ausgabeinformation an eine Störungsbehandlungsstelle; eine Auswertungseinrichtung in der Störungsbehandlungsstelle zum Auswerten der übermittelten Störungsmeldung, die aufweist: eine Datenbank zum Bereitstellen einer Mehrzahl von vorgegebenen Mustern und einer Mehrzahl der den vorgegebenen Mustern zugeordneten Fehlerbehandlungsroutinen in der Störungsbehebungsstelle; Mindestens einer Mustererkennungseinrichtung zum Auswählen der Muster aus der Mehrzahl von vorgegebenen Muster, die in der Eingabeinformation und/oder der Ausgabeinformation enthalten sind; und eine zweite Schnittstelle zum Übermitteln der ermittelten Fehlerbehandlungsroutine an die Datenverarbeitungseinrichtung zum Behandeln der Störung.

In den Unteransprüchen und bevorzugten Ausführungsformen sind Weiterbildungen und Ausgestaltungen der vorliegenden Erfindung angegeben.

In einer Ausgestaltung werden die Ausgangsinformationen als Rohdaten und/oder die Ausgangsinformation als wie von der Mensch-Maschine-Schnittstelle ausgegeben erfasst.

In einer Weiterbildung wird die übermittelte Fehlerbehandlungsroutine durch die Datenverarbeitungseinrichtung ausgeführt. Hierdurch kann eine automatische Behebung der Störung erreicht werden. Alternativ können dem Benutzer Hinweise gegeben werden, wie er die Störung beheben kann.

In einer Weiterbildung werden die übermittelte Störungsmeldung und die Eingabeinformation und/oder die Ausgabeinformation in einer Datenbank der Störungsbehandlungseinrichtung gespeichert. Die gespeicherten Störungsmeldungen können zur Analyse der Qualität des Computerprogrammproduktes herangezogen werden. Ferner kann eine Systembenachrichtigung ausgegeben werden, wenn die zuletzt übermittelte Störungsmeldung mit der Eingabeinformation und/oder der Ausgabeinformation keiner der bisherig gespeicherten Störungsmeldungen entspricht. Auf die Systembenachrichtigung hin wird entsprechendes Servicepersonal angewiesen, eine Fehlerbehandlungsroutine für diese zuletzt übermittelte Störungsmeldung zu entwickeln und bereitzustellen.

In einer nicht beanspruchten, alternativen Ausgestaltung wird eine Spracheingabe als akustische Eingabeinformation erfasst, der Textinhalt aus der akustischen Eingabeinformation mittels einer Spracherkennungseinrichtung ermittelt und diejenige Fehlerbehandlungsroutine ermittelt, deren zugehöriges akustisches Muster in dem Textinhalt enthalten ist.

Gemäß einer Weiterbildung wird der Textinhalt mittels einer Übersetzungsmaschine in eine Standardsprache übersetzt, um die in dem Textinhalt enthaltenen Muster zu ermitteln.

In einer anderen Ausgestaltung wird das zu einer Fehlerbehandlungsroutine zugehörige textbasierte Muster in unterschiedlichen Sprachen bereitgestellt.

In einer Weiterbildung stellt die erste Schnittstelle zwischen der Datenverarbeitungseinrichtung und der Störungsbehebungsstelle eine verschlüsselte Verbindung bereit. Dies ist insbesondere dann von Bedeutung, wenn auf sensible Daten in der Eingabeinformation und/oder der Ausgabeinformation enthalten sein können. Dies können zum Beispiel Kostenkalkulationen sein, welche im Moment einer Fehlfunktion auf dem Bildschirm eines Rechners dargestellt sind.

Nachfolgend wird die vorliegende Erfindung beispielhaft mit bevorzugten Ausführungsformen und Figuren beschrieben. In den Figuren zeigen:
- Figur 1: ein Blockdiagramm einer Ausgestaltungsform;
- Figur 2: ein Blockdiagramm einer zweiten Ausgestaltungsform;
- Figur 3: ein Blockdiagramm einer dritten Ausgestaltungsform; und
- Figur 4: ein Flussdiagramm zu der dritten Ausführungsform.

In den Figuren bezeichnen gleiche Bezugszeichen gleiche oder funktionsgleiche Elemente.

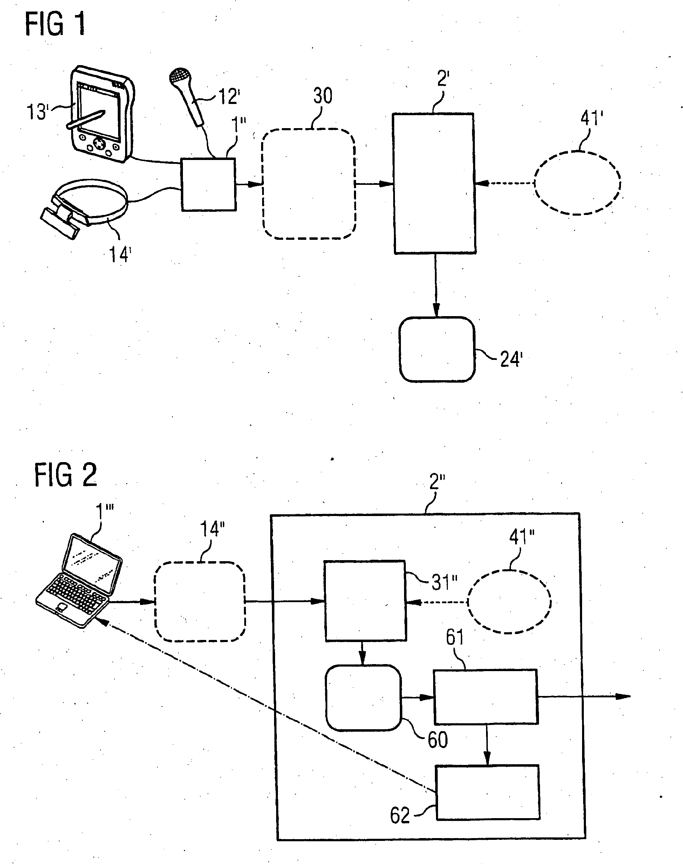

In Figur 1 ist ein Blockdiagramm einer ersten Ausführungsform schematisch dargestellt. Eine Datenverarbeitungseinrichtung 1" zum Beispiel ein Bürorechner, ist mit einer Mehrzahl von Mensch-Maschine-Schnittstellen 12', 13', 14' verbunden. Diese Mensch-Maschine-Schnittstellen dienen zum Umwandeln von seitens des Benutzers eingegebenen Informationen in Datenpakete, die seitens der Datenverarbeitungseinrichtung weiter verarbeitet werden können. Eine solche Eingabeschnittstelle kann zum Beispiel ein Mikrofon 12' mit einer Sprachanalyseeinrichtung sein. Die akustischen Informationen des Benutzers, welche zum Beispiel Befehlsinformationen enthalten können, werden von dem Mikrofon aufgenommen und der Sprachanalyseeinrichtung in den Syntax der Datenverarbeitungseinrichtung 1" umgewandelt. Analog können zum Beispiel auch wie dargestellt, eine Schrifterfassungseinrichtung 13' oder Symbolerfassungseinrichtung verwendet werden. Weitere Mensch-Maschine-Schnittstellen für die Eingabe von Informationen beinhalten Gestikerfassungssysteme. Ferner wird für die Kommunikation des Rechners mit dem Benutzer eine Ausgabeeinrichtung 14' als Mensch-Maschine-Schnittstelle benötigt. Dies kann zum Beispiel wie dargestellt ein Headmounted-Display, ein Monitor, oder eine Sprachausgabe umfassen.

Die seitens des Benutzers eingegebenen Rohdaten werden nachfolgend als Information, genauer als Eingabeinformation bezeichnet. In analoger Weise werden die an den Benutzer ausgegebenen Daten der Datenverarbeitungseinrichtung 1", nachdem sie von der Mensch-Maschine-Schnittstelle in eine für den Benutzer erfassbare Form umgewandelt sind, auch als Information, genauer als Ausgabeinformation bezeichnet.

Die Eingabeeinrichtungen 12', 13' sind derart mit der Datenverarbeitungseinrichtung 1" verbunden, dass auch deren Eingabeinformation beziehungsweise Ausgabeinformation durch die Datenverarbeitungseinrichtung 1" erfasst wird. Gegebenenfalls, in Figur 1 nicht dargestellt, sind hier zusätzliche Erfassungseinrichtungen bereitgestellt. Eine Kamera kann zum Beispiel das Bild einer Anzeigeneinheit der Datenverarbeitungseinrichtung 1" aufnehmen und die gefilmte Information übermitteln.

Beim Auftreten einer Störung veranlasst der Benutzer, dass die Informationen oder Rohdaten über eine Schnittstellle 30 an eine Störungsbehebungsschnittstelle 2" übermittelt werden. Die Störungsbehebungsschnittstelle 2" ist mit einer Datenbank 41' verbunden, in der eine Vielzahl von verschiedenen Mustern oder Mustererkennungsroutinen abgespeichert sind. Die Mustererkennungseinrichtung prüft nun die übermittelten Informationen gegen die abgespeicherten Muster. Ist eines der Muster in den Informationen enthalten, wird eine Kennzahl des Musters ausgegeben.

In einer weiteren Datenbank (nicht dargestellt) sind Fehlerbehandlungsroutinen abgespeichert. Jeder dieser Fehlerbehandlungsroutinen ist mindestens ein Muster in Form der Kennzahl zugeordnet. Aus dieser Datenbank wird nun anhand der ausgegebenen Kennzahl die entsprechende Fehlerbehandlungsroutine ausgewählt. Die ausgewählte Fehlerbehandlungsroutine kann über eine Schnittstelle 24' an den Benutzer oder die Datenverarbeitungseinrichtung 1" übermittelt werden. Der Benutzer führt die übermittelte Fehlerbehandlungsroutine entweder manuell aus, indem er die angegebenen Schritte befolgt, oder startet eine Routine, welche die angegebenen Schritte durchführt.

In Figur 2 ist eine zweite Ausführungsform der vorliegenden Erfindung als Blockdiagramm dargestellt. Ein Laptop, Datenverarbeitungseinrichtung 1'"speichert beim Auftreten einer Störungsmeldung den Bildschirminhalt ab. Dieser Bildschirminhalt 14" wird zusammen mit der Störungsmeldung an eine Störungsbehebungsstelle 2" übermittelt. In der Bildschirminformation sind vielfältige Elemente enthalten. Diese umfassen grafische Elemente und auch textbasierte Elemente. Von besonderem Interesse sind bei den textbasierten Elementen die seitens des Benutzers eingegebenen Informationen. Ferner sind die zuletzt dargestellten Dialogelemente von besonderem Interesse. Die textbasierten Informationen werden mittels eines Texterkennungsprogrammes durch eine entsprechende Texterkennungseinrichtung 31" extrahiert und in Daten umgewandelt, die seitens der Störungsbehandlungsstelle 2" weiter verarbeitet werden können. Die Texterkennungseinrichtung 31" kann mit einer modularen Schnittstelle 41" verbunden sein. Diese modulare Schnittstelle 41" oder Datenbank beinhaltet eine Vielzahl unterschiedlicher Texterkennungsroutinen. Diese können spezialisiert für verschiedene Sprachen und Sprachsymbole eingerichtet sein. Dies umfasst die englische Sprache, mit lateinischen Zeichen und die chinesische Sprache, mit chinesischem Zeichen, etc. Die modular gestaltete Texterkennungseinrichtung ermöglicht eine universelle Bearbeitung von Störungen unabhängig von der verwendeten Sprache der Benutzer.

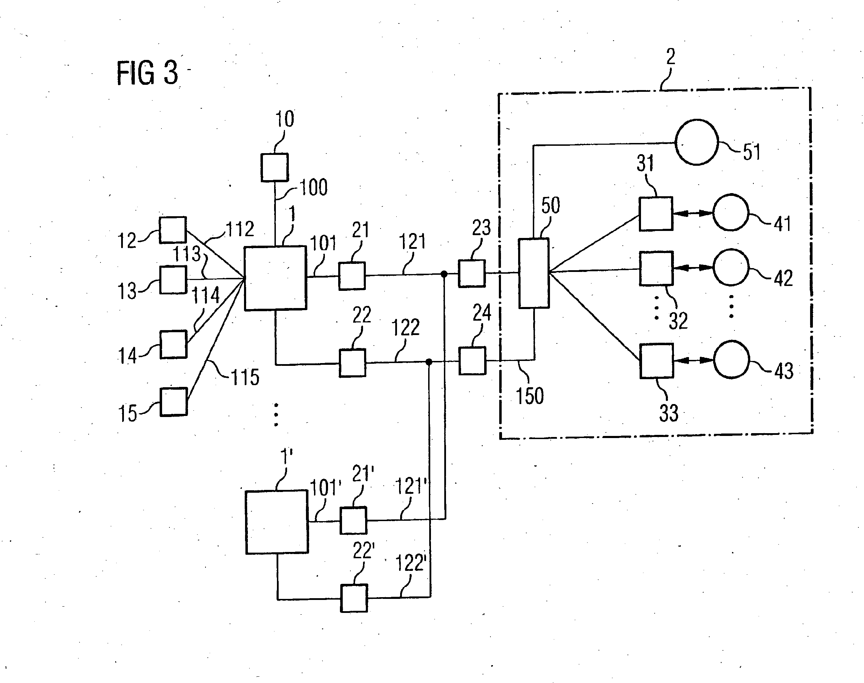

In Figur 3 ist eine dritte Ausführungsform als Blockdiagramm schematisch dargestellt. Eine Mehrzahl von Datenverarbeitungseinrichtungen 1, 1" sind mit einer Störungsbehandlungsstelle 2 verbunden. Die Datenverarbeitungeinrichtungen 1, 1" umfassen Personalcomputer, Workstations, Serverstationen, Leitstände, etc. In einem Verbund aus Datenverarbeitungseinrichtungen 1, 1" können ausschließlich gleichartige Einrichtungen, aber auch verschiedenartige Einrichtungen miteinander verbunden sein. Letzteres dürfte der am häufigsten anzutreffende Fall sein. Selbst in einem Büro unterscheiden sich die einzelnen Rechner in ihrer Hardwareausstattung und den installierten Softwarekomponenten.

Jede dieser Datenverarbeitungseinrichtung 1, 1' ist mit einer Vielzahl von verschiedenen Eingabeeinrichtungen und zumindest einer Ausgabeeinrichtung zur Kommunikation mit einem Benutzer versehen. Typische Eingabevorrichtungen 12, 13 umfassen eine Tastatur, eine Maus. Weitere Eingabeeinrichtungen umfassen berührempfindliche Bildschirme oder Oberflächen, Grafiktabletts, stiftbasierte Eingabesysteme mit einer Schrifterkennung, akustische Eingabesysteme, zum Beispiel mit einer Spracherkennung, Gestikerfassungssysteme umfassen.

Die vorgenannten Einrichtungen sind Beispiele für eine nicht abgeschlossene Liste von Mensch-Maschine-Schnittstellen für eine Eingabe. Die Mensch-Maschine-Schnittstelle wandelt die Information, die der Benutzer bereitstellt in Daten um, welche von der Datenverarbeitungseinrichtung 1 weiter bearbeitet werden können. In dieser Ausführungsform wird die eingegebene Information 112, 113 auch ungewandelt, das heißt als Rohdaten, der Datenverarbeitungseinrichtung 1 übermittelt oder von dieser aufgezeichnet.

Eine weitere Mensch-Maschine-Schnittstelle 14, 15 wird für den Benutzer bereitgestellt, um die von der Datenverarbeitungseinrichtung 1 ausgegebenen Daten darzustellen. Die gebräuchlichste Mensch-Maschine-Schnittstelle zum Ausgeben ist der Bildschirm oder eine ähnliche Anzeige. Weitere Ausgabeeinrichtungen können eine Druckeinrichtung, eine Braille-Zeile etc. sein. Die von der Datenverarbeitungseinrichtung 1 ausgegebenen Daten werden durch diese Mensch-Maschine-Schnittstellen in eine Information umgewandelt, die der Benutzer wahrnehmen kann. Diese dargestellt Information 114, 115 Ausgabeinformation wird in der Form erfasst, wie sie sich dem Benutzer darstellt, an die Datenverarbeitungseinrichtung 1 übermittelt und von dieser aufgezeichnet.

Hierzu kann der Bildschirm mittels einer Kamera abgelichtet werden und dieses Bild oder die Bilderfolge an die Datenverarbeitungseinrichtung 1 übermittelt werden. Bei einem Bildschirm ist es ebenfalls möglich, den Bildschirminhalt mittels eines so genannten Screenshots zu ermitteln.

Die Datenverarbeitungseinrichtung 1 weist eine Störerkennungseinrichtung 10 auf, die eine Störungsmeldung 100 an die Datenverarbeitungseinrichtung 1 ausgibt. Die Störungserkennungseinrichtung kann manuell durch einen Benutzer aktiviert werden, wenn dieser mit dem Ablauf eines Computerprogrammproduktes oder Ähnlichem unzufrieden ist. Ferner kann die Störungserkennungseinrichtung auch automatisch ein Fehlverhalten, zum Beispiel Endlosschleifen, mit beispielsweise einem Watch-Dog-Zeitgeber erkennen und die entsprechende Störungsmeldung 100 ausgeben.

Nachdem eine Störungsmeldung generiert ist, übermittelt die Datenverarbeitungseinrichtung 1 die von ihr aufgezeichneten Eingabe- und Ausgabeinformationen an die Störungsbehandlungsstelle 2. Hierzu ist eine Schnittstelle 21 vorgesehen. Diese verschlüsselt vorzugsweise die übermittelten Eingabe- und Ausgabeinformationen. Dies ist aus Sicherheitsgründen notwendig, da nicht gewährleistet werden kann, dass in den Ein- und Ausgabeinformationen keine sicherheitsrelevanten Informationsteile enthalten sind. Anstelle einer Verschlüsselung können auch andere abhörsichere Kanäle zum Übermitteln der Information an die Störungsbehandlungsstelle 2 bereitgestellt sein.

Zusätzlich zu den Eingabe- und Ausgabeinformationen können auch der Zustand der Prozessoren, die Registereinträge der Prozessoren, Speicherauszüge etc. mit an die Störungsbehandlungsstelle 2 übermittelt werden. Ferner können, falls vorhanden, auch Logdateien oder andere Ausgabedateien der einzelnen Applikationen mit übermittelt werden. Auf diese Weise werden vielfältigste unterschiedliche Daten und Informationen zur Auswertung der Störung bereitgestellt.

Die Störungsbehandlungsstelle 2 weist vorzugsweise eine Eingangsschnittstelle 23 auf, die die Kommunikation mit den einzelnen Datenverarbeitungseinrichtungen 1, 1' verwaltet. Hierzu können geeignete Router verwendet werden. Die übermittelten Informationen werden einer Verwaltungseinrichtung 50 zugeführt. Diese leitet die einzelnen Informationen an spezifische Mustererkennungseinrichtungen 31, 32, 33 weiter. Die Zuordnung erfolgt nach dem Typ der Information. Ein Bildschirmausdruck, der nach einer bestimmten Zeichenfolge durchsucht werden soll, wird einer entsprechenden Mustererkennungseinrichtung 31 mit integrierter Texterkennung zugeführt. Die Texterkennung kommuniziert mit einer Datenbank 41, in der die aufzufindenden Wörter, Satzbausteine, Sätze hinterlegt sind. Diese Datenbank 41 kann für viele verschiedene Sprachen bereitgestellt werden. Auf diese Weise ist die Störungsbehandlungsstelle 2 global einsetzbar. Ferner kann auch die Texterkennungseinrichtung modular austauschbar sein, um einerseits mit lateinischen, kyrillischen, chinesischen, oder anderen asiatischen Schriftzeichen verarbeiten zu können. Zu jedem der zu erkennenden Wörter, Satzbausteine oder Sätze ist ein eindeutiges Kennzeichen oder Index zugeordnet. Erkennt die Mustererkennungseinrichtung 31 eines dieser Textelemente in der übermittelten Information, zum Beispiel den Bildschirmausdruck, so wird dieses eindeutige Kennzeichen an die Verwaltungseinrichtung 50 übermittelt.

Analog zu der Mustererkennungseinrichtung mit einer Texterkennungseinrichtung können auch welche mit einer Spracherkennungseinrichtung, 32, einer Symbolerkennungseinrichtung, 33, einer Gestikerkennungseinrichtung, etc. vorgesehen sein. Diesen sind entsprechende Datenbanken 42, 43 mit vorzufindenden Mustern bereitgestellt.

Die Störungsbehebungsstelle 2 ist an eine Datenbank 51 angeschlossen oder beinhaltet eine Datenbank, in der verschiedenste Störungen mit zugehörigen eindeutigen Kennzeichen gespeichert sind. Ferner wird für jede Störung zumindest eine mögliche Fehlerbehandlungsroutine bereitgestellt von der angenommen wird, dass sie die Störung beseitigen kann. Diese Fehlerbehandlungsroutinen werden in der Regel durch Servicepersonal ermittelt und in die Datenbank eingegeben.

Die Verwaltungseinrichtung 50 liest aus der Datenbank 51 die Fehlerbehandlungsroutinen aus, deren zugehörige eindeutige Kennzeichen mit den Kennzeichen übereinstimmen, die an die Verwaltungseinrichtung 50 von den Mustererkennungseinrichtungen 31 bis 33 übermittelt werden.

Die ausgelesene Fehlerbehandlungsroutine 150 wird über eine Ausgangsschnittstelle 24 an die entsprechende Datenverarbeitungseinrichtung 1, 1' übermittelt.

Je nach Fehlerbehandlungsroutine und Aufbau der Datenverarbeitungseinrichtung 1, 1' wird die Fehlerroutine automatisch ausgeführt oder der Benutzer angewiesen, bestimmte Schritte manuell auszuführen, um den einer Störung zugrunde liegenden Fehler zu beheben.

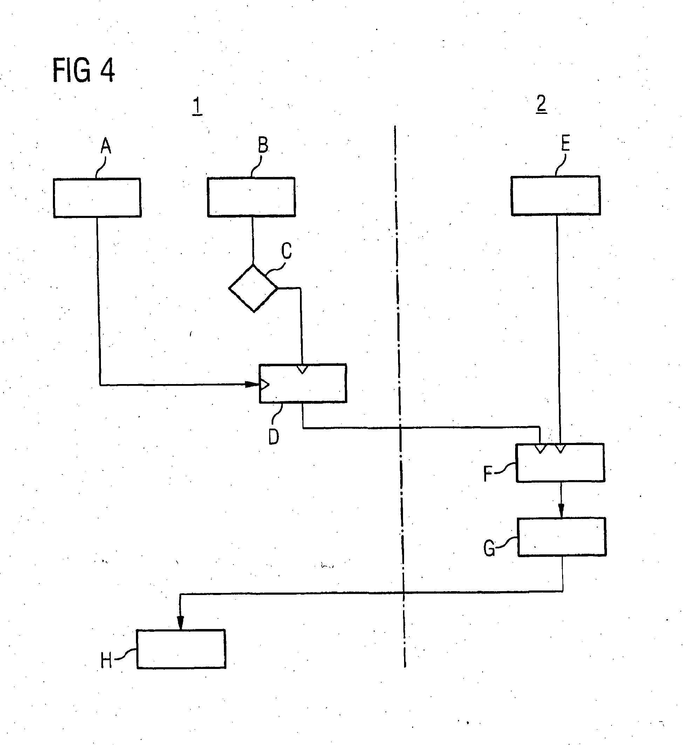

In Figur 4 ist in einem Flussdiagramm der Ablauf einer Störungsbehandlung mit der in Figur 3 gezeigten Ausführungsform beschrieben. Von einer Mensch-Maschine-Schnittstelle werden Informationen aufgezeichnet. Parallel oder sequentiell wird der Applikationsablauf einer Anwendung überwacht B. Tritt eine Störung auf C, werden die aufgezeichneten Informationen von der Datenverarbeitungseinrichtung 1 an eine Störungsbehandlungsstelle 2 weitergeleitet (D). Durch die Störungsbehebungsstelle werden Fehlerbehandlungsroutinen für einzelne verschiedene mögliche Störungen bereitgestellt (E). Ferner werden Mustererkennungseinrichtungen oder Mustererkennungsverfahren bereitgestellt, die die entsprechenden Störungen anhand der übermittelten Informationen identifizieren. Hierzu werden geeignete Muster oder Mustererkennungsverfahren bereitgestellt. Die übermittelten Informationen werden seitens der Störungsbehandlungsstelle nach den vorgegebenen Mustern oder mit den Musterverfahren durchsucht (F). Liegt ein solches Muster der Information vor und dadurch eine bestimmte Störung identifiziert, wird die zur Behebung dieser Störung bereitgestellt Fehlerbehandlungsroutine aus einer Datenbank ausgelesen. Diese Fehlerbehandlungsroutine wird dann an die Datenverarbeitungseinrichtung 1 übermittelt. Vorzugsweise führt die Datenverarbeitungseinrichtung 1 die übermittelte Fehlerbehandlungsroutine automatisch aus (H).

Obwohl die vorliegende Erfindung anhand bevorzugter Ausführungsformen beschrieben wurde, ist sie nicht darauf beschränkt.

Insbesondere ist dem Fachmann offensichtlich, dass Elemente, die nur in einer der drei Ausführungsformen beschrieben sind, auch in den anderen Ausführungsformen verwendet werden können.

## Patentansprüche

1. Verfahren zur Störungsbehandlung einer Datenverarbeitungseinrichtung
(a) automatisches Erfassen von Ausgabeinformationen (114, 115) einer Datenverarbeitungseinrichtung (1) an mindestens einer Mensch-Maschine-Schnittstelle der Datenverarbeitungseinrichtung (1);
(b) automatisches Erfassen einer Störungsmeldung (100), die eine Störung der Datenverarbeitungseinrichtung (1) anzeigt;
(c) Übermitteln der erfassten Störungsmeldung zusammen mit der Ausgabeinformation (114, 115) an eine Störungsbehandlungsstelle (2);
(d) Auswerten der übermittelten Störungsmeldung durch:
(d1) Bereitstellen einer Mehrzahl von vorgegebenen Mustern und einer Mehrzahl der den vorgegebenen Mustern zugeordneten Fehlerbehandlungsroutinen in der Störungsbehandlungsstelle;
(d2) Auswählen der Muster aus der Mehrzahl von vorgegebenen Mustern, die in der Ausgabeinformation (114, 115) enthalten sind; und
(d3) Ermitteln der den ausgewählten Mustern zugeordneten Fehlerbehandlungsroutine aus einer Mehrzahl von Fehlerbehandlungsroutinen durch die Störungsbehandlungsstelle (2) ;
(e) Übermitteln der ermittelten Fehlerbehandlungsroutine an die Datenverarbeitungseinrichtung (1) zum Behandeln der Störung,
**dadurch gekennzeichnet, dass**
die Darstellung einer Anzeigeneinrichtung (14, 14', 14'') der Datenverarbeitungseinrichtung (1) als optische Ausgabeinformation (114, 115) erfasst wird, ein Textinhalt der optischen Ausgabeinformation (114) mittels einer Texterkennungseinrichtung (31") ermittelt wird und
diejenige Fehlerbehandlungsroutine ermittelt wird, deren zugehöriges textbasiertes Muster in dem Textinhalt enthalten ist.

2. Verfahren nach Anspruch 1,
**dadurch gekennzeichnet,**
**dass** die übermittelte Fehlerbehandlungsroutine durch die Datenverarbeitungseinrichtung ausgeführt wird.

3. Verfahren nach einem der vorhergehenden Ansprüche,
**dadurch gekennzeichnet,**
**dass** die übermittelte Störungsmeldung und die Ausgabeinformation (114, 115) in einer Datenbank der Störungsbehandlungseinrichtung gespeichert werden.

4. Verfahren nach Anspruch 3,
**dadurch gekennzeichnet,**
**dass** eine Systembenachrichtigung ausgegeben wird, wenn die zuletzt übermittelte Störungsmeldung mit der Ausgabeinformation (114, 115) keiner der bisher gespeicherten Störungsmeldungen entspricht.

5. Verfahren nach Anspruch 1,
**dadurch gekennzeichnet,**
**dass** der Textinhalt in eine Standardsprache mittels einer Übersetzungsmaschine zum Ermitteln der in dem Textinhalt enthaltenen Muster übersetzt wird und/oder das zu einer Fehlerbehandlungsroutine zugehörige textbasierte Muster in einer Vielzahl von Sprachen bereitgestellt wird.

6. Vorrichtung zur Störungsbehandlung einer Datenverarbeitungseinrichtung mit:
- mindestens einer Erfassungseinrichtung zum Erfassen von Ausgabeinformationen (114, 115) einer Datenverarbeitungseinrichtung (1) an einer Mensch-Maschine-Schnittstelle in der Datenverarbeitungseinrichtung (1);
- einer Störungserfassungseinrichtung zum Erfassen einer Störungsmeldung (100), die eine Störung der Datenverarbeitungseinrichtung (1) anzeigt;
- einer ersten Schnittstelle zum Übermitteln der erfassten Störungsmeldung zusammen mit der Ausgabeinformation (114, 115) an eine Störungsbehandlungsstelle (2);
- einer Auswertungseinrichtung in der Störungsbehandlungsstelle (2) zum Auswerten der übermittelten Störungsmeldung, mit:
- einer Datenbank (41) zum Bereitstellen einer Mehrzahl von vorgegebenen Mustern und einer Mehrzahl der den vorgegebenen Merkmalen zugeordneten Fehlerbehandlungsroutinen in der Störungsbehebungsstelle;
- mindestens einer Mustererkennungseinrichtung zum Auswählen der Muster aus der Mehrzahl von vorgegebenen Mustern, die in der Ausgabeinformation (114, 115) enthalten sind;
- einer zweiten Schnittstelle zum Übermitteln der ermittelten Fehlerbehandlungsroutine an die Datenverarbeitungseinrichtung (1) zum Behandeln der Störung,
**dadurch gekennzeichnet, dass**
- die Erfassungseinrichtung geeignet ist, die Darstellung einer Anzeigeneinrichtung (14, 14', 14'') der Datenverarbeitungseinrichtung (1) als optische Ausgabeinformation (114, 115) zu erfassen
- die Vorrichtung des Weiteren eine Texterkennungseinrichtung (31") zum Ermitteln eines Textinhalts der optischen Ausgabeinformation (114) umfasst und
- die Mustererkennungseinrichtung dazu eingerichtet ist, diejenige Fehlerbehandlungsroutine zu ermitteln, deren zugehöriges textbasiertes Muster in dem Textinhalt enthalten ist.

7. Vorrichtung nach Anspruch 6,
**dadurch gekennzeichnet,**
**dass** die erste Schnittstelle zwischen der Datenverarbeitungseinrichtung (1) und der Störungsbehebungsstelle (2) eine verschlüsselte Verbindung bereitstellt.

## Claims

1. Method for handling faults in a data processing device, comprising
(a) automatically acquiring output information (114, 115) from a data processing device (1) at at least one man-machine interface of the data processing device (1);
(b) automatically detecting a fault message (100) which indicates a fault in the data processing device (1);
(c) transmitting the detected fault message together with the output information (114, 115) to a fault handling location (2) ;
(d) evaluating the transmitted fault message by:
(d1) providing a plurality of predefined patterns and a plurality of fault handling routines assigned to the predefined patterns in the fault handling location;
(d2) selecting the patterns from the plurality of predefined patterns contained in the output information (114, 115); and
(d3) determining the fault handling routine assigned to the selected patterns from a plurality of fault handling routines by means of the fault handling location (2);
(e) transmitting the determined fault handling routine to the data processing device (1) for the purpose of handling the fault,
**characterized in that**
the display of a display device (14, 14', 14'') of the data processing device (1) is acquired as optical output information (114, 115), text contents of the optical output information (114) are determined using a text recognition device (31"), and that fault handling routine whose associated text-based pattern is contained in the text contents is determined.

2. Method according to Claim 1,
**characterized in that**
the transmitted fault handling routine is executed by the data processing device.

3. Method according to one of the preceding claims,
**characterized in that**
the transmitted fault message and the output information (114, 115) are stored in a database of the fault handling device.

4. Method according to Claim 3,
**characterized in that**
a system notification is output if the fault message transmitted last with the output information (114, 115) does not correspond to any of the previously stored fault messages.

5. Method according to Claim 1,
**characterized in that**
the text contents are translated into a standard language using a translation machine in order to determine the patterns contained in the text contents and/or the text-based pattern associated with a fault handling routine is provided in a plurality of languages.

6. Apparatus for handling faults in a data processing device, having:
- at least one acquisition device for acquiring output information (114, 115) from a data processing device (1) at a man-machine interface in the data processing device (1);
- a fault detection device for detecting a fault message (100) which indicates a fault in the data processing device (1);
- a first interface for transmitting the detected fault message together with the output information (114, 115) to a fault handling location (2);
- an evaluation device in the fault handling location (2) for evaluating the transmitted fault message, having:
- a database (41) for providing a plurality of predefined patterns and a plurality of fault handling routines assigned to the predefined features in the fault elimination location;
- at least one pattern recognition device selecting the patterns from the plurality of predefined patterns contained in the output information (114, 115);
- a second interface for transmitting the determined fault handling routine to the data processing device (1) for the purpose of handling the fault,
**characterized in that**
- the acquisition device is suitable for acquiring the display of a display device (14, 14', 14'') of the data processing device (1) as optical output information (114, 115),
- the apparatus also comprises a text recognition device (31'') for determining text contents of the optical output information (114), and
- the pattern recognition device is set up to determine that fault handling routine whose associated text-based pattern is contained in the text contents.

7. Apparatus according to Claim 6,
**characterized in that**
the first interface provides an encrypted connection between the data processing device (1) and the fault elimination location (2).

## Revendications

1. Procédé de traitement des perturbations d'un dispositif de traitement de données, comprenant
(a) saisie automatique d'informations de sortie (114, 115) d'un dispositif (1) de traitement de données sur au moins une interface homme-machine du dispositif (1) de traitement de données,
(b) saisie automatique d'un message de perturbation (100) qui indique une perturbation du dispositif (1) de traitement de données,
(c) transmission du message de perturbation qui a été saisi à un emplacement (2) de traitement des perturbations, en même temps que l'information de sortie (114, 115),
(d) évaluation du message de perturbation qui a été transmis, en :
(d1) préparant dans l'emplacement de traitement des perturbations plusieurs motifs prédéterminés et de plusieurs routines de traitement de défauts associées aux motifs prédéterminés,
(d2) en sélectionnant le motif parmi les motifs prédéterminés qui sont contenus dans l'information de sortie (114, 115) et
(d3) en déterminant parmi plusieurs routines de traitement d'erreur par l'emplacement (2) de traitement de perturbations la routine de traitement d'erreur associée aux motifs sélectionnés,
(e) transmission de la routine de traitement de défaut qui a été déterminée au dispositif (1) de traitement de données en vue de traiter la perturbation,
**caractérisé en ce que**
la présentation d'un dispositif d'affichage (14, 14', 14'') du dispositif (1) de traitement de données est saisie comme information optique de sortie (114, 115), le texte contenu dans l'information optique de sortie (114) étant déterminé au moyen d'un dispositif (31'') de reconnaissance de texte et
**en ce que** la routine de traitement de défaut déterminée est celle dont le motif basé sur le texte associé est contenu dans le texte.

2. Procédé selon la revendication 1, **caractérisé en ce que** la routine transmise de traitement de données est exécutée par le dispositif de traitement de données.

3. Procédé selon l'une des revendications précédentes, **caractérisé en ce que** le message de perturbation transmis et l'information de sortie (114, 115) sont conservés en mémoire dans une base de données du dispositif de traitement des perturbations.

4. Procédé selon la revendication 3, **caractérisé en ce qu'**un avertissement système est délivré lorsque le message de perturbation transmis en dernier lieu avec l'information de sortie (114, 115) ne correspond à aucun des messages de perturbation conservés en mémoire jusque là.

5. Procédé selon la revendication 1, **caractérisé en ce que** le texte contenu est traduit en un langage standard au moyen d'une machine de traduction qui détermine les motifs contenus dans le texte contenu et/ou **en ce que** le motif à base de texte associé à une routine de traitement de défaut est préparé en plusieurs langues.

6. Ensemble de traitement des perturbations d'un dispositif de traitement de données, l'ensemble présentant :
au moins un dispositif de saisie qui saisit des informations de sortie (114, 115) d'un dispositif (1) de traitement de données sur une interface homme-machine du dispositif (1) de traitement de données,
un dispositif de saisie de perturbation qui saisit un message de perturbation (100) qui indique une perturbation du dispositif (1) de traitement de données,
une première interface qui transmet le message de perturbation saisi à un emplacement (2) de traitement des perturbations, en même temps que l'information de sortie (114, 115),
un dispositif d'évaluation de l'emplacement (2) de traitement des perturbations, qui évalue le message de perturbation qui a été transmis et qui présente :
une base de données (41) qui prépare plusieurs motifs prédéterminés et plusieurs des routines de traitement de défaut associées aux caractéristiques prédéterminées dans l'emplacement de suppression des perturbations,
au moins un dispositif de reconnaissance de motif qui sélectionne les motifs à partir de plusieurs motifs prédéterminés contenus dans l'information de sortie (114, 115),
une deuxième interface qui transmet la routine de traitement de défauts qui a été déterminée au dispositif (1) de traitement de données pour traiter la perturbation, **caractérisé en ce que**
le dispositif de saisie convient pour saisir la présentation d'un dispositif d'affichage (14, 14', 14'') du dispositif (1) de traitement de données comme information optique de sortie (114, 115),
**en ce que** l'ensemble comporte en outre un dispositif (31'') de reconnaissance de texte qui détermine le texte que contient l'information optique de sortie (114) et
**en ce que** le dispositif de reconnaissance de motif est conçu pour déterminer la routine de traitement de défauts dont le motif basé sur le texte associé est contenu dans le texte.

7. Ensemble selon la revendication 6, **caractérisé en ce que** la première interface entre le dispositif (1) de traitement de données et l'emplacement (2) de suppression de perturbation établit une liaison cryptée.
